# EUROPEAN PATENT SPECIFICATION

(11) **EP 2 184 528 B1**
(45) Date of publication and mention of the grant of the patent: **01.06.2016**
(21) Application number: 09175533.0
(22) Date of filing: 10.11.2009
(51) Int. Cl.: F16M 11/08, F16M 11/18

(54) **Supporting stand for multimedia equipment**
Stützständer für eine Multimediaanlage
Pied de support pour composant multimédia

(30) Priority: 11.11.2008 DK 200801557
(43) Date of publication of application: 12.05.2010
(73) Proprietor: BANG & OLUFSEN A/S, 7600 Struer (DK)
(72) Inventor: Nielsen, Kaj, 7790 Thyholm (DK)
(74) Representative: Tellefsen, Jens J.

(56) References cited:
- EP-A1- 1 821 173
- WO-A1-2006/053382
- DE-A1- 10 304 357
- JP-A- 2006 011 354
- JP-U- 58 077 956
- US-A1- 2001 011 696

## Description

### Field of the Invention

The present invention relates to a stand for an audio-video appliance including a display screen and in particular a TV- or PC screen.

### Background of the Invention

In the art there are numerous examples of various ways of mounting appliances either directly on a wall or by means of a stand such that the appliance may be placed on a horizontal surface such as for example a floor. See for example WO2008098378, US2008158801, JP2005115301 and others.

US2007045488 and GB2391170 disclose stands of the type mentioned above, where only a single rotational movement is possible. For a number of purposes a single rotational movement is enough. In US2007045488 a column is rotatable relative to a foot member, such that the screen may be pivoted about a substantially vertical axis, arranged centrally in the foot member.

In GB2391170 the means for attaching an appliance is a column which is slidable up and down relative to an arm. The arm is arranged on a plate member which is rotationable relative to a footmember. In this manner it is possible to alter the viewing angle. As the means for attaching an appliance is provided on a column which is slightly tilted relative to vertical and towards the centre of the footplate, the appliance rotates substantially around a vertical axis through the centre of the foot member.

Further is WO 2006/053382 describing a stand for a screen. The stand comprises a a first disc, suitable to be placed on a floor or a desktop. Superposed and arranged coaxially is a second disc, which may rotate about the center of the first disc. On the second disc is arranged an upstanding column, intended for mounting the screen onto. The mounting mechanism of the screen may also be rotated relative to the column. In this manner it is foreseen that the screen may be facing in the same general direction, whereas the position of the screen may be moved slightly sideways, and slightly back and forth, due to the rotation of the second disc relative to the first disc.

### Object of the Invention

The object of the present invention is to provide a stand which is suitable to be placed on a horizontal surface such as for example a shelf, table or floor surface, and when the appliance is not in use it may be store very closely to a vertical surface such as for example a wall, and when in use the appliance may be directed into a position most suitable for the user.

For example where the appliance is a screen it may be advantageous to be able to orient the screen such that a viewer will be placed in a right angle to the plane of the screen in order to optimize both the viewing experience and also in most cases the audio experience.

In particular with the larger and larger size of flat screens in private homes it is advantageous to be able to store the screen when not in use along a wall, where it takes up a minimum of space. When in use it may be desirable to alter the position of the screen in order to obtain the optimum viewing angle. The closer to the wall in the stored position the less obtrusive the screen appears when not in use.

### Description of the Invention

The present invention consequently provides a stand for an appliance such as a screen and in particular a TV or PC screen, where the stand comprises
- a substantially planar foot member, where said planar foot member has a substantially larger extent in a plane than in a direction perpendicular to said plane;
- an arm rotatably arranged in or on said foot member, for rotation around a rotation axis, where said arm rotates in a plane substantially parallel to the plane of the foot member;
- a column arranged on said arm, such that the longitudinal axis of the column is substantially perpendicular to the plane of the foot member and said longitudinal axis is not coinciding with the axis of rotation;
- means on said column for attaching an appliance to said column;
where the column or the means for attaching an appliance is rotatable about the column's longitudinal axis, relative to the arm.

With this construction it is possible to maintain a stable construction due to the provision of the foot member and as the arm is rotatable in the same plane as the foot member which will typically be in a plane parallel to the horizontal surface on which the stand is placed, such as for example a shelf, table or floor, the appliance's attachment point provided with the means on said column for attaching an appliance may be rotated away from for example a wall. Furthermore the double rotation possibility provides a number of advantages. By rotating the arm arranged eccentrically relative to the foot member the appliance is moved. For example, in a situation where the footplate and the appliance is arranged as close to a wall as possible, the first rotation will bring the appliance away from the wall. This movement may be obstructed as the sides of the appliance may engage the wall. Therefore by providing the second rotation means, the appliance may be rotated relative to the arm, such that a movement of the appliance away from the wall may be accomplished, even if the appliance originally was placed immediately adjacent a wall. These advantages are naturally more pronounced the larger width the appliances have. It is hereby possible to place the screen/appliance very close to the wall. When changing the angle of the screen (around a vertical axis), in order to obtain the optimum viewing angle, the screen would interfere with the wall, which would not allow the screen to turn. The double rotation of both the appliance and the arm allows the screen to move away from the wall and at the same time turn the screen around a vertical axis. By providing a further degree of angular freedom it is possible to direct the appliance, for example in the shape of a screen, in a direction not decided by the rotational relationship by the foot member and the circular plate/arm. With the double rotation arrangement it is consequently possible to arrange even a large appliance of the type to which the present invention is aimed, very close to a wall. This is especially advantageous where the appliance after use (for example after having watched TV) is stored along and in close proximity to a wall in order to allow access to the area previously occupied by the screen which had been position in the correct viewing angle, for example at an oblique angle to the wall.

In a further advantageous embodiment of the invention the foot member has a circular plate shape, and the arm is integrated in a circular plate, where the diameter of the foot member plate is equal to or less than the diameter of the plate in which the arm is integrated, and where the two circular plates are coaxially arranged and rotate relative to each other about an axis arranged perpendicular through the centres of both plates.

In this embodiment it is foreseen that the arm corresponds to for example a radius of the circular plate, such that the visible construction will be a plate member rotatable in relation to a further circular plate, i.e. the foot member, and where a column is arranged at a predetermined position on the circular place. By rotating the two plates relative to each other the same effect as stated above will be present, namely that the column will be able to move from a position, for example adjacent a wall, to a position where the column is substantially removed from said wall.

In a still further advantageous embodiment of the invention the arm is integrated in a minor circular plate, where said minor circular plate is rotatably arranged in or on a major circular plate member, where said major circular plate member is rotatably arranged relative to the planar foot member, where all plates rotate in the same or parallel planes.

This embodiment provides for the same adjustability as the embodiments described above, but has the further advantage that due to the two relatively rotatable plate members, the minor and the major plates, it is possible to adjust and place the column more freely in relation to the foot member, such that any desirable position of the appliance may be achieved simply by rotating the circular plate members relative to each other.

In a still further advantageous embodiment the column is connected to the arm with means for rotating the column relative to the arm and/or where means are provided for rotating the arm relative to the foot member, where said means is/are either in the form of electrical motors, optionally directly engaging the column or indirectly engaging the column and/or arm by means of a belt, or where the means for rotating the column and/or arm are mechanical and comprise a toothed wheel in cooperation with a toothed rim.

By providing means for rotating the different members of the stand it is possible to provide a remote control such that a user may control the position of the appliance from a remote position simply by manipulating and thereby activating the different means for rotating the arm whether or not integrated in a plate member and the angle of the column relative to the foot member.

Where the means are provided as mechanical means they might be coupled or uncoupled meaning that in a coupled construction turning the arm will automatically due to a coupling with a mechanical means turn the column such that the appliance, for example in the shape of a television screen, at all times will be provided with the maximum angle in relation to a wall without coming into contact with said wall.

Where the means are uncoupled, it will be possible to turn for example the arm relative to the foot member without the column being rotated and vice versa.

In a still further advantageous embodiment the column comprises a longitudinal cavity and an opening adjacent the means for attaching an appliance, such that cables and the like from the appliance may be introduced through the opening and guided to the arm, which arm also comprises a cavity, such that a substantial cavity is provided from the foot member to the opening in the means for attaching an appliance. In this embodiment it is possible to hide all cables such that the overall impression of the stand will not be fussy due to the cables, as the cables are hidden inside the stand.

Furthermore, as the present stand is designed to be placed adjacent a wall, it may be possible to direct the cables directly from the foot member and into the wall as the inventive movements of the present stand allows the foot member to be placed immediately adjacent and even in contact with a wall member such that also the cabling may be arranged invisibly which from a design point of view has a number of advantages.

In a still further advantageous embodiment the arm is arranged in a rail or slit construction in the foot member.

By providing a slit it will be possible to translate the arm relative to the foot member in addition to turning, whereby even further angular displacements of the appliance, such as for example a screen, will be made possible.

In a still further advantageous embodiment of the invention the arm is integrated in a plate member, where said plate member has a side edge, which side edge may be rotated 180° relative to the foot member and optionally concurrently displaced along a rail or slit provided in the foot member, and where shutter plates are arranged between the plate member and the foot member, such that the shutter plates will cover the foot member, should said foot member be exposed by rotating the plate member.

The shutter plates provided in order to cover the opening which will arise when the plate member is slid relative to the foot member such that the stand in all positions will have a cover construction either by the plate member itself or by a combination of the plate member and the shutter plates such that the mechanical arrangement and wire hidden in the foot member will not be visible to a user.

In order to facilitate smooth and reliable movements of the different parts of the stand, the stand is in a further advantageous embodiment provided with low or non-friction bearings between mutually moving rotating or sliding parts, members and/or plates.

### Description of the Drawing

The invention will now be explained with reference to the accompanying drawings, wherein
- Fig. 1: illustrates schematically an embodiment of the invention where a screen is mounted on a stand according to a preferred embodiment;
- Fig. 2: same embodiment as illustrated in fig 1, only seen from behind;
- Fig. 3 a)-d): illustrate the movement of a screen relative to a wall, provided by the stand illustrated in fig 1 and 2;
- Fig. 4 a), b): illustrate principles of a further embodiment;
- Fig. 5 a), b): illustrate principles of a further embodiment;
- Fig. 6 a), b): illustrate principles of a further embodiment.

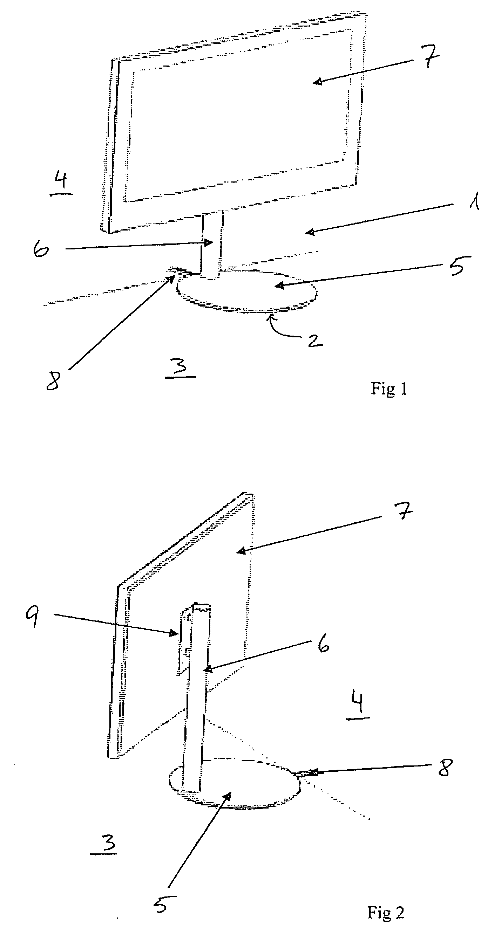

In figures 1 and 2 is illustrated a preferred embodiment of the invention seen in perspective. In figure 1 a front view is illustrated, and in figure 2 a rear perspective view is illustrated.

The stand 1 according to the invention comprises a foot member 2 which in this embodiment is placed on a floor surface 3 against a wall 4. On the foot member 2 is placed a circular plate member 5 which is rotatable relative to the foot member 2. Substantially perpendicular to the plane of the foot member and the circular plate 5, i.e. in a plane parallel to the floor 3, is arranged a column 6 which is arranged for rotation around a vertical axis relative to the floor 3. On the column is arranged a TV or PC screen 7. The cabling necessary for the device is hidden inside a cavity (not illustrated) in the column and the circular plate 5 and the foot member 2 such that the cabling 8 exits the foot member 2 immediately adjacent the wall 4 in order to provide a neat and desirable design. Optionally the cables 8 may be housed in e.g. a tube that acts at the same time as attachment means connecting the support device to the wall 4.

In order to attach the TV/PC screen 7 to the column 6 as illustrated with reference to figure 2 fastening means 9 are provided on the column 6. When the circular plate 5 in which the arm displacing the column is integrated, is rotated as illustrated with reference to figure 2, the column moves away from the wall 4 such that the screen 7 may be rotated relative to the position illustrated in figure 1. The rotation of the screen may be facilitated either by providing the fastening means 9 as being rotatable relative to the column 6 or that the column 6 is rotatably mounted in the arm integrated in the circular plate 5. Alternatively, both degrees of rotational freedom may be provided.

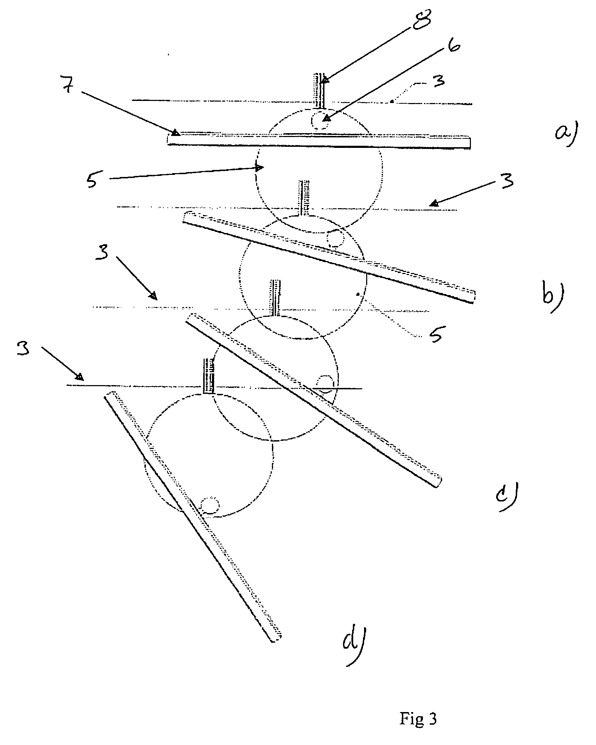

In figure 3 the movement of the screen depicted in figures 1 and 2 is illustrated from above. Like reference numbers denote like features of the stand and TV/PC screen. As is clearly illustrated in figures 3 a)-d), the screen 7 may be angled more and more relative to the wall 3 without engaging the wall due to the rotation of the circular plate member 5 whereby the column 6 is further and further removed from the wall such that the side edges of the TV/PC screen member does not come into contact with the wall 3. At the same time it is foreseen that the screen may be stored relatively close to the wall 3 as illustrated in figure 3 a), and at the same time due to the inventive stand according to the present invention the screen may be rotated into a position as indicated by figure 3 d) for optimum viewing angle.

Naturally, the rotation of the circular plate member 5 may be in the opposite direction in order to obtain any desired viewing angle. The limitation of the screen's angle is naturally connected to the width of the screen and the placement of the foot member and circular plate 2, 5 relative to the wall 3. Had a smaller screen been installed on the column 6 in the embodiment illustrated with reference to figures 1, 2 and 3, it would have been possible to rotate the screen completely about a vertical axis through the column 6 such that the screen could have attained any direction.

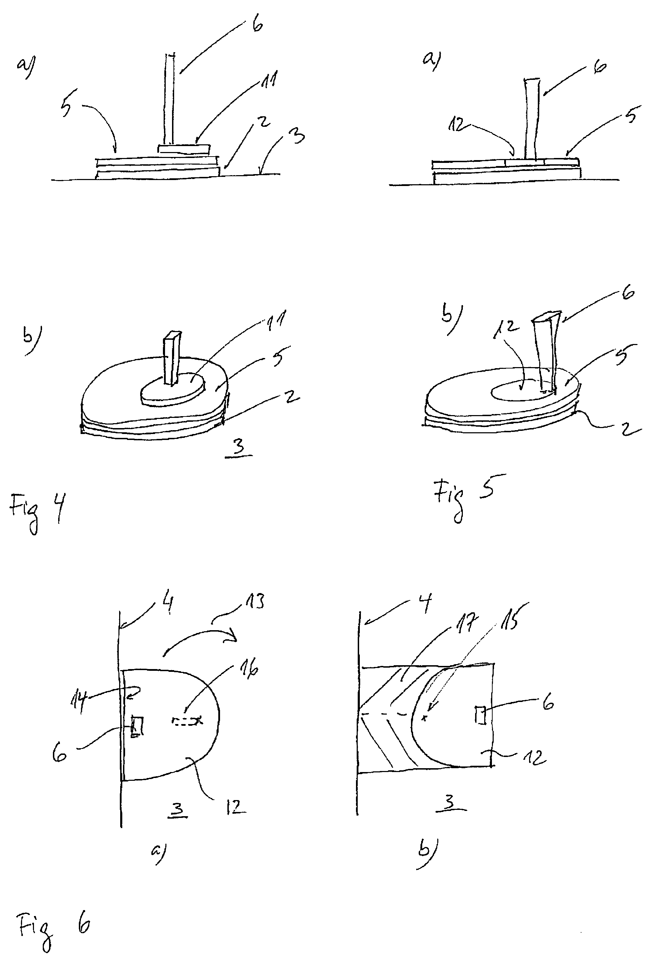

Turning to figure 4 a) and b) a further embodiment of the invention is illustrated. In this embodiment the arm is integrated into a minor plate 11 which minor plate is arranged on the circular plate member 5 which in turn is arranged on the foot member as already discussed above. In this configuration it is possible to turn the circular plate 5 relative to the foot member 2 and at the same time rotate the minor plate 11 relative to the circular plate 5 such that a number of further positions of the column relative to the foot plate becomes possible. A similar embodiment is illustrated in figure 5 where the minor circular plate 12 is integrated into the circular plate 5, i.e. both plates 5, 12 are positioned in the same plane, such that they together constitute the surface of the stand from which the column extends. The movements attainable with the embodiment according to figures 5 a) and b) are equivalent to those described with reference to figures 4 a) and b).

In a still further advantageous embodiment of the invention as illustrated with reference to figure 6 a) and b) the arm is integrated in a plate member 12 which is provided with a linear section 14 such that the plate 12 may be placed very close to a wall 4. The column 6 is arranged adjacent the linear section 14 of the plate 12 such that also the appliance, for example TV/PC screen, may be placed in close proximity to a wall. By rotating and in some embodiments also sliding the plate 12 in a direction as indicated by the arrow 13 the plate 12 may arrive in a position as indicated in figure 6 b) such that rotation around the point indicated by 15 will place the column and thereby the appliance in a position relatively far removed from the wall 4.

In order to allow the linear section 14 to rotate relative to the wall 4 it may be necessary to provide a rail or other sliding mechanism schematically indicated by 16 in order for the plate 12 to move away from the wall 4 allowing the corners of the plate 12 to pass the wall during the turning movement from the position illustrated in figure 6 a) to the position illustrated in figure 6 b).

In order to provide a unitary impression shutters 17 are provided such that as the plate 12 moves away from the wall partly by sliding and partly by rotation, the shutters will extend and cover the foot member situated under the plate 12 in direct contact with the floor 3. In this manner is achieved that a completely unitary and homogenous construction is created.

## Claims

1. Stand (1) for a multimedia appliance including a display screen and in particular a TV or PC screen (7), where the stand (1) comprises
- a substantially planar foot member (2), where said planar foot member (2) has a substantially larger extent in a plane than in a direction perpendicular to said plane;
- an arm rotatably arranged in or on said foot member, for rotation around a rotation axis, where said arm rotates in a plane substantially parallel to the plane of the foot member;
- a column (6) arranged on said arm, such that the longitudinal axis of the column (6) is substantially perpendicular to the plane of the foot member (2) and said longitudinal axis is not coinciding with the axis of rotation;
- means (9) on said column (6) for attaching an appliance to said column;
where the column (6) or the means (7) for attaching an appliance is rotatable about the column's longitudinal axis, relative to the arm, where the foot member (2) las a circular plate shape, and the arm is integrated in a circular plate (5), where the diameter of the foot member plate (2) is equal to or less than the diameter of the plate (5) in which the arm is integrated, and where the two circular plates (2,5) are coaxially arranged and rotate relative to each other about an axis arranged perpendicular through the centres of both plates and further where the arm is integrated in a minor circular plate (11), where said minor circular plate (11) is rotatably arranged in or on a major circular plate member (5), where said major circular circular plate member (5) is rotatably arranged relative to the planar foot member (2), where all plates rotate in the same or parallel planes.

2. Stand (1) according to any preceding claim wherein the column (6) is connected to the arm with means for rotating the column (6) relative to the arm and/or where means are provided for rotating the arm relative to the foot member (2), where said means is/are either in the form of electrical motors, optionally directly engaging the column or indirectly engaging the column and/or arm by means of a belt, or where the means for rotating the column and/or arm are mechanical and comprise a toothed wheel in cooperation with a toothed rim.

3. Stand (1) according to any preceding claim wherein the column (6) comprises a longitudinal cavity and an opening adjacent the means for attaching an appliance, such that cables (8) and the like from the appliance may be introduced through the opening and guided to the arm, which arm also comprises a cavity, such that a substantial cavity is provided from the foot member (2) to the opening in the means for attaching an appliance.

4. Stand according to claim 1, wherein the arm is arranged in a rail or slit construction in the foot member (2).

5. Stand according to claim 1 or 4 wherein the arm is integrated in a plate member (5), where said plate member has a side edge, which side edge may be rotated 180° relative to the foot member and optionally concurrently displaced along a rail or slit provided in the foot member, and where shutter plates (17) are arranged between the plate member and the foot member, such that the shutter plates will cover the foot member, should said foot member be exposed by rotating the plate member.

6. Stand according to any of claims 1, 2, 3, or 5, wherein low or non-friction bearings are arranged between mutually moving, rotating or sliding parts, members and/or plates.

## Patentansprüche

1. Stützständer (1) für ein Multimediagerät umfassend einen Bildschirm und insbesondere einen TV- oder PC-Bildschirm (7), wobei der Stützständer (1) folgendes umfasst:
- einen hauptsächlich flächigen Standfuß (2), der in einer Ebene größer ist als in einer auf dieser Ebene senkrecht stehenden Ebene ist;
- einen im oder am Standfuß angeordneten, rotierbar angeordneten Arm für Rotation um eine Rotationsachse, wobei der Arm in einer mit der Standfußebene hauptsächlich parallelen Ebene rotiert;
- einen auf dem Arm angeordneten Pfosten (6), so dass die Längsachse des Pfostens (6) hauptsächlich senkrecht auf der Standfußebene (2) steht, und die Längsachse nicht mit der Rotationsachse zusammenfällt;
- Mittel (9) auf dem Pfosten (6) zum Befestigen des Geräts auf den Pfosten;
wobei der Pfosten (6) oder das Mittel (7) zum Befestigen eines Geräts um die Längsachse des Pfostens relativ zum Arm rotierbar ist, wobei der Standfuß (2) die Form einer kreisförmigen Platte aufweist, und der Arm in einer kreisförmigen Platte (5) integriert ist, wobei der Durchmesser des Standfußes (2) gleich oder kleiner ist als der Durchmesser der Platte (5), in der der Arm integriert ist, und wobei die zwei kreisförmigen Platten (2, 5) coaxial angeordnet sind und relativ zu einander um eine senkrecht durch die Mitte beider Platten angeordnete Achse rotieren, und wobei ferner der Arm in einer kleineren kreisförmigen Platte (11) integriert ist, die in oder auf einer größeren kreisförmigen Platte (5) angeordnet ist, wobei die größere kreisförmige Platte (5) relativ zu dem flächigen Standfußteil (2) rotierbar angeordnet ist, wobei alle Platten in denselben oder parallelen Ebenen rotieren.

2. Stützständer (1) nach Anspruch 1, wobei der Pfosten (6) mit dem Arm mit Mitteln zum Rotieren des Pfostens (6) relativ zum Arm verbunden ist und/oder wobei Mittel zum Rotieren des Arms relativ zum Standfuß (2) vorgesehen sind, welche/s Mittel entweder elektrische Motoren ist/sind, die wahlfrei mit dem Pfosten direkt eingreifen oder mit dem Pfosten und/oder dem Arm mittels eines Gurts indirekt eingreifen, oder wobei die Mittel zum Rotieren des Pfostens und/oder des Arms mechanisch sind und umfassen einen mit einem Zahnkranz zusammenwirkenden Zahnrad.

3. Stützständer (1) nach irgendeinem der vorhergehenden Ansprüche, wobei der Pfosten (6) eine längs verlaufende Höhlung sowie eine Öffnung gegenüber den Befestigungsmitteln des Geräts aufweist, so dass Kabel (8) od.dgl. vom Gerät durch die Öffnung eingeführt und zum Arm weitergezogen werden können, wobei auch der Arm eine Höhlung aufweist, so dass eine wesentliche Höhlung vom Standfuß (2) zur Öffnung hin im Befestigungsmittel eines Geräts vorgesehen ist.

4. Stützständer nach Anspruch 1, wobei der Arm in einer Schiene oder Schlitzvoruchtung im Standfuß (2) angeordnet ist.

5. Stützständer nach Anspruch 1 oder 4, wobei der Arm in einem Plattenteil (5) integriert ist, wobei der Plattenteil eine Seitenkante aufweist, die relativ zum Standfuß 180 Grad rotierbar und wahlfrei gleichzeitig entlang einer/einem im Standfuß angeordneten Schiene oder Schlitz verschiebbar ist, uns wobei Verschlußbleche (17) zwischen dem Plattenteil und dem Standfuß angeordnet sind, so dass die Verschlußbleche den Standfuß abdecken, sollte der Standfuß durch die Rotation des Plattenteils freigelegt werden.

6. Stützständer nach irgendeinem der Ansprüche 1, 2, 3 oder 5, wobei Lager mit geringer oder keiner Reibung zwischen gegenseitig bewegbaren, rotierbaren oder gleitbaren Teilen, Gliedern und/oder Platten angeordnet sind.

## Revendications

1. Support (1) pour un appareil multimédia comprenant un écran d'affichage et en particulier une télévision ou écran d'ordinateur (7), le support (1) comprenant
- un élément de pied sensiblement plan (2), où ledit élément de pied plan (2) présente une extension sensiblement plus grande dans un plan que dans une direction perpendiculaire audit plan;
- un bras arrangé de manière rotative dans ou sur ledit élément de pied pour tourner autour d'un axe de rotation, où ledit bras tourne dans un plan sensiblement parallèle au plan de l'élément de pied;
- une colonne (6) arrangée sur ledit bras, de sorte que l'axe longitudinal de la colonne (6) est sensiblement perpendiculaire au plan de l'élément de pied (2) et ledit axe longitudinal n'est pas confondu avec l'axe de rotation;
- des moyens (9) sur ladite colonne (6) pour fixer un appareil à ladite colonne;
où la colonne (6) ou les moyens (7) de fixation d'un appareil peut tourner autour de l'axe longitudinal de la colonne, par rapport au bras, où l'élément de pied (2) a une forme de plaque circulaire, et le bras est intégré dans une plaque circulaire (5), où le diamètre de la plaque de l'élément de pied est égal ou inférieur au diamètre de la plaque (5) dans laquelle le bras est intégré, et où les deux plaques circulaires (2, 5) sont disposées de manière coaxiale et tournent l'une par rapport à l'autre autour d'un axe disposé perpendiculairement à travers les centres des deux plaques et en outre où le bras est intégré dans une plaque circulaire inférieure (11), où ladite plaque circulaire inférieure (11) est agencée de manière rotative dans ou sur un élément de plaque circulaire supérieure (5), ledit élément de plaque circulaire supérieure (5) est agencé de façon à pouvoir tourner par rapport à l'élément de pied plan (2), où toutes les plaques tournent dans le même plan ou dans les plans parallèles.

2. Support (1) selon une revendication précédente dans lequel la colonne (6) est reliée au bras par des moyens à faire tourner la colonne (6) par rapport au bras et/ou des moyens sont prévus pour faire tourner le bras par rapport à l'élément de pied (2), lesdits moyens étant soit sous la forme de moteurs électriques, facultativement s'engageant directement dans la colonne ou s'engageant indirectement dans la colonne et/ou le bras au moyen d'une courroie, ou les moyens pour faire tourner la colonne et/ou le bras étant mécaniques et comprenant une roue dentée en coopération avec une couronne dentée.

3. Support (1) selon l'une quelconque des revendications précédentes dans lequel la colonne (6) comprend une cavité longitudinale et une ouverture adjacente aux moyens de fixation d'un appareil, de sorte que des câbles (8) et similaires depuis l'appareil peuvent être introduits par l'ouverture et guidés vers le bras, lequel bras comprend également une cavité, de sorte qu'une cavité substantielle est fournie à partir de l'élément de pied (2) à l'ouverture dans les moyens pour fixer un appareil.

4. Support selon la revendication 1, dans lequel le bras est disposé dans une construction de rail ou de fente dans l'élément de pied (2).

5. Support selon la revendication 1 ou 4 dans lequel le bras est intégré dans un élément de plaque (5), ledit élément de plaque présentant un bord latéral, ledit bord latéral peut être tourné de 180° par rapport à l'élément de pied et éventuellement parallèlement déplacé le long d'un rail ou de fente prévu dans l'élément de pied, et des plaques d'obturation (17) étant disposées entre l'élément de plaque et l'élément de pied, de sorte que les plaques d'obturation recouvrent l'élément de pied, si ledit pied sera exposée par rotation de l'élément de plaque.

6. Support selon l'une quelconque des revendications 1, 2, 3 ou 5, dans lequel des paliers à friction faible ou sans friction sont disposés entre des parties, des éléments et/ou des plaques mutuellement mobiles, rotatifs ou coulissants.
